# EUROPÄISCHE PATENTSCHRIFT

(11) **EP 0 332 160 B1**
(45) Veröffentlichungstag und Bekanntmachung des Hinweises auf die Patenterteilung: **26.05.1993**
(21) Anmeldenummer: 89104066.9
(22) Anmeldetag: 08.03.1989
(51) Int. Cl.: G07D 9/06

(54) **Münzen-Stapelvorrichtung**
Coin stacking device
Dispositif pour empiler des pièces de monnaie

(30) Priorität: 11.03.1988 DE 3808157
(43) Veröffentlichungstag der Anmeldung: 13.09.1989
(73) Patentinhaber: STANDARDWERK EUGEN REIS GMBH, D-76646 Bruchsal (DE)
(72) Erfinder: Rapp, Joachim, D-7504 Weingarten (DE)
(74) Vertreter: Zahn, Roland, Dipl.-Ing.

(56) Entgegenhaltungen:
- DE-A- 3 239 860
- GB-A- 2 187 176

## Beschreibung

Die vorliegende Erfindung bezieht sich auf eine Vorrichtung zum vertikalen Stapeln nacheinander zugeführter Münzen oder dergleichen (unter dem Terminus Münzen subsumierte) scheibenförmiger Gegenstände nach dem Oberbegriff des Patentanspruchs 1.

Eine Vorrichtung dieser Art ist aus der DE-PS 32 39 860 bekannt. Hierbei wird der Münzstapel auf einem Paar sich gegenüberliegender Münzenträger aufgestapelt. Diese beiden Münzenträger müssen über ihre endlos umlaufenden Transportbänder exakt synchronisiert sein, damit die in den Stapelraum eingeschossenen Münzen nicht etwa schräg liegen oder gar hochkant stehen.

Die der vorliegenden Erfindung zugrunde liegende Aufgabe besteht darin, eine Münzstapelvorrichtung der gattungsgemäßen Art anzugeben, bei der der Münzenstapel auf nur einem einzigen Münzenträger aufgestapelt wird.

Diese Aufgabe wird durch die im kennzeichnenden Teil des Patentanspruchs 1 angegebenen Mittel und Maßnahmen gelöst.

Weiterbildungen und besondere Ausgestaltungen dieser Vorrichtung sind Gegenstand der Unteransprüche.

Die erfindungsgemäße Münzstapelvorrichtung wird im folgenden anhand der Zeichnung näher erläutert. Diese zeigt in
- Fig. 1: - in Prinzipdarstellung - entsprechend der Schnittlinie A-B nach Fig 2 eine komplette Münzstapelvorrichtung;
- Fig. 2: eine Aufsicht auf die Münzstapelvorrichtung nach Fig 1;
- Fig. 3: eine Detaildarstellung eines Münzenträgers mit Gelenkachsen und Führungsrollen.

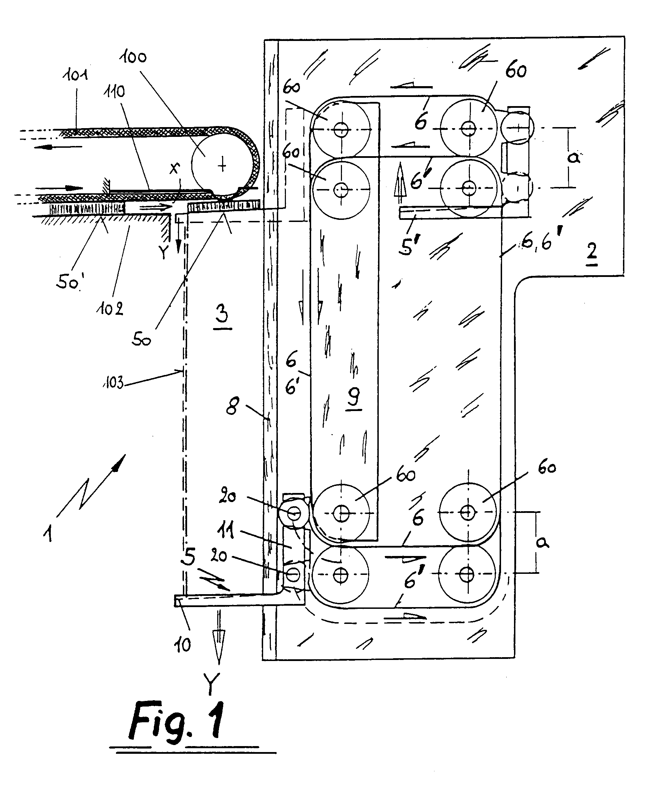

In Fig 1 ist eine Münzstapelvorrichtung 1 dargestellt, die als Teil einer Münzenverpackungsmaschine Münzen einer bestimmten vorsortierten Art in kontinuierlicher Folge aufnimmt. Diese Münzen werden vertikal übereinander gestapelt und nach Erreichen einer bestimmten Stapelhöhe, d.h. nach Aufstapelung einer vorgegebenen Anzahl der Münzen, wird dieser Münzenstapel eingewickelt und an ein Sammelbehältnis abgegeben bzw. zu diesem transportiert.

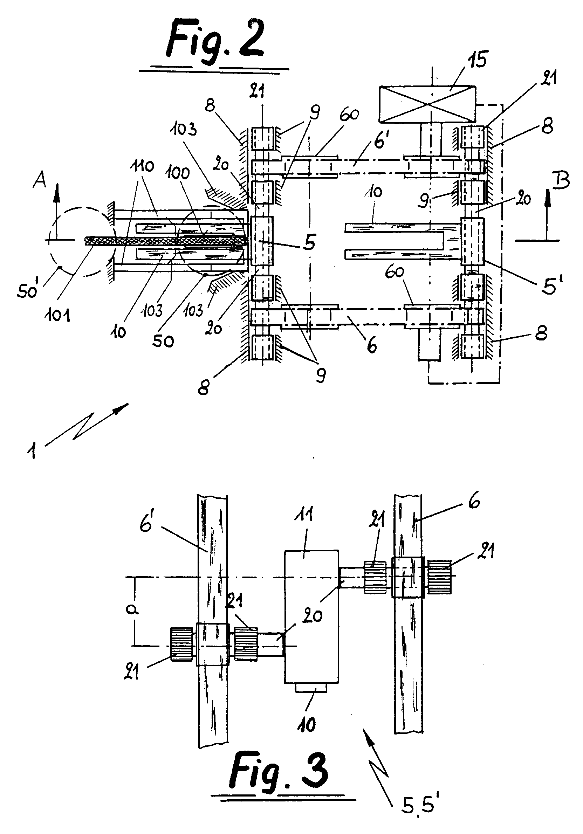

Die Münzstapelvorrichtung 1 gemäß Fig. 1 besteht aus zwei Seitenteilen 2, die über geeignete Konstruktionsmittel zu einem schachtähnlichen Gebilde miteinander verbunden sind. Dieses schachtähnliche Gebilde wird seitlich an eine - nur schematisch angedeutete - Münzen-Vereinzelungs-und-Führungsschiene 102 angestellt, von der die Münzen 50, 50′ mittels eines über eine Umlenkrolle 100 geführten endlosen Förderbands 101 Stück für Stück in Richtung Münzstapelvorrichtun 1 transportiert und abgegeben werden(vgl. Pfeil X). Die Verbindung bzw. die Schnittstelle zwischen der Münzstapelvorrichtung 1 und dem die Münzen 50,50′ zuführenden Münzförderband 101 bildet ein Stapelraum 3, der von (in Fig 2 schematisch angedeuteten) Begrenzungselementen 103 eingerahmt wird. Diese Begrenzungselemente 103 begrenzen jeweils einen dem Durchmesser der zu stapelnden Münzart(50,50′) entsprechend einstellbaren Ringraum;dieser Ringraum und die Umlenkrolle 100 sind dabei vorzugsweise so aufeinander abgestimmt, daß die Umlenkrolle 100 koaxial zum Stapelraum 3 angeordnet ist.

Dieser Ringraum, d.h. der Stapelraum 3 , wird zur Münzstapelvorrichtung 1 hin durch eine - nicht gezeichnete-Anschlagplatte begrenzt, so daß ein vertikaler Stapelschacht definiert ist.

Längs dieses Stapelschachts werden die Münzen aufgestapelt, und zwar auf einem mittels Transportmittel schrittweise von oben nach unten bewegten Münzenträger 5. In einer Art Ausgangsstellung - vgl. die gestrichelte Darstellung - befindet sich dieser Münzenträger 5 mit seiner Vorderkante auf einem Niveau, das geringfügig unter dem der genannten Führungsschiene 102 liegt, um von vornherein ein Anstoßen an der jeweils vorher eingestapelten Münze zu vermeiden. Der Münzenträger 5 befindet sich dabei in der Verlängerung des Münzförderbandes 101 der Münzen-Vereinzelungs- und-Führungsschiene 102. Von dieser Position ausgehend wird der Münzenträger 5 der zugeführten Münzart und deren Dicke entsprechend schrittweise abwärts bewegt (Pfeil Y) bis die vorgegebene Anzahl an Münzen aufgestapelt ist. Dies entspricht der in Fig. 1 zeichnerisch dargestellten unteren Position des Münzenträgers 5; der Münzenstapel wird dann in dieser Position eingewickelt oder er wird zu einer separaten Umwickelstation weitertransportiert.

Der vom Münzenstapel befreite Münzenträger 5 wird mittels der endlos umlaufenden Transportmittel wieder zur Ausgangsposition transportiert. Um eine Leerzeit beim Münzenstapeln zu vermeiden, ist an den Transportmitteln ein weiterer Münzenträger 5′ fixiert, der - bezogen auf die Länge bzw. die Bahn der Transportmittel - symmetrisch angeordnet ist Dieser weitere Münzenträger 5′ wird nun seinerseits in die dem Münzförderband 101 gegenüberliegende Ausgangsposition verbracht und Stück für Stück mit Münzen 50,50′ beladen.

Die soweit beschriebene Münzstapelvorrichtung 1 ist Stand der Technik (vgl. DE-PS 32 39 860), wenn davon abgesehen wird, daß hierbei die Münzen auf zwei niveaugleichen miteinander korrespondierenden Münzenträgern gestapelt werden.

Die vorliegende Erfindung bezieht sich auf die Ausbildung und Führung der Münzenträger 5,5′. Konstruktiv betrachtet bestehen diese Münzenträger 5,5′ aus einem L-förmigen Finger, dessen erster Schenkel 10 horizontal in den Stapelraum 3 ragt und als eigentliche Stapelauflage dient. Der zweite Schenkel 11 ist parallel zur Stapel-bzw. Abwärtsrichtung Y orientiert und er wird aufgrund der nachfolgend zu beschreibenden Verbindung bzw. Aufhängung an den Transportmitteln in dieser Ausrichtung gehalten. Gemäß einem bevorzugten Ausführungsbeispiel ist der genannte erste Schenkel 10 des L-förmigen Fingers konisch ausgebildet, und zwar so, daß er zur freien Vorderkante hin abfällt. Damit ergibt sich eine zusätzliche Sicherheit dafür, daß die auf den Münzenträger 5,5′ "aufgeschossenen" Münzen 50,50′ nicht an der Vorderkante des Münzenträgers 5,5′ und an den gestapelten Münzen 50,50′ anstoßen; schließlich liegen auch die nacheinander gestapelten Münzen 50,50′ schräg im Stapelraum 3.

Als Transportmittel dienen zwei endlos umlaufende Förderbänder 6,6′ (oder Förderketten), die über je vier im Rechteck angeordnete Führungs- und Umlenkrollen 60 längs einer entsprechenden, im wesentlichen rechteckigen Führungsbahn umlaufen. Diese Führungsbahnen sind in Abwärtsrichtung Y betrachtet jeweils gegeneinander um ein Maß a versetzt. Die Führungsbänder 6,6′ laufen somit in zwei parallel zueinander liegenden Bahnebenen um. Der zweite Schenkel 11 der L-förmigen Münzenträger 5,5′ ist nun an seiner einen Seite mit dem einen Förderband (z.B. 6) und an seiner zweiten Seite mit dem zweiten Förderband (z.B 6′) über Gelenkachsen 20 gekoppelt, die in Längsrichtung des zweiten Schenkels 11 betrachtet dem Versatz a der Bahn der Förderbänder 6,6′ entsprechend gegeneinander versetzt sind. Beim Umlaufen der Förderbänder 6,6′ werden somit die Gelenkachsen 20 auf - dem Maß a entsprechenden - unterschiedlich hohem Niveau geführt, so daß der erste Schenkel 10 des Münzenträgers 5 stets horizontal umläuft. Bezogen auf die zeichnerische Darstellung bedeutet dies, daß senkrecht zur Zeichenebene zwei Bewegungsbahnen der Förderbänder 6,6′ verlaufen, wobei die - relativ zur Stapelrichtung Y - obere Bewegungsbahn für das Förderband 6 die Bahn für die dem freien Ende des zweiten Schenkels 11 benachbarte Gelenkachse 20 ist; das zweite Förderband 6′ führt die dem ersten Schenkel 10 benachbarte Gelenkachse 20. Damit wird der Münzenträger 5,5′ horizontal in den Stapelschacht eingefahren und schrittweise der Stapelgeschwindigkeit entsprechend abwärts (Pfeil Y) bewegt. Am unteren Umkehrpunkt angelangt, wird der Münzenträger 5,5′ horizontal ausgefahren, wodurch beispielsweise der Münzenstapel einfach abgestreift werden kann.

Beide Münzenträger 5,5′ sind kinematisch betrachtet exakt so aufeinander abgestimmt, daß gleichzeitig mit dem Freigeben eines im Stapelraum 3 aufgestapelten (d.h. fertigen) Münzenstapels am quasi unteren Umkehrpunkt des einen Münzenträgers (z.B. 5) der zweite Münzenträger (z.B. 5′ ) in die (wie bereits erwähnt gestrichelt gezeichnete ) Stapelausgangsposition einfährt, um die erste Münze eines Münzenstapels aufzunehmen.

Zur Erhöhung der Funktionssicherheit der Münzen-Stapelvorrichtung als Einheit ist - wie bereits erwähnt - der Münzenträger 5,5′ so gestaltet, daß seine freie Vorderkante geringfügig abfällt und so die Münzen 50,50′ eines Münzenstapels zur Münzen-Vereinzelungs- und -Führungsschiene 102 hin geneigt liegen. Um diese Schräglage zu unterstützen und von vornherein zu vermeiden, daß einzelne Münzen 50,50′ sich etwa hochkant stellen und die Funktion stören, ist weiter vorgesehen, mit einem Andrückelement, beispielsweise einer Feder 110, jeweils gegen die oberste Münze 50 zu drücken. Auf diese Weise ist gewährleistet, daß die jeweils nachfolgend zugeführten Münzen 50′ glatt nachgeführt werden können - die vorhergehende Münze 50 liegt mit der Hinterkante tiefer und wird in dieser Lage von der Feder 110 festgehalten.

Um weiter zu gewährleisten, daß der Münzenträger 5,5′ während des Stapelvorgangs selbst stabil geführt ist, wird der Münzenträger 5,5′ längs seiner - auf die Zeichnung bezogen - vorderen Bewegungsbahn zwangsgeführt. Hierfür sind koaxial zu den Gelenkachsen 20 am zweiten Schenkel 11 des Münzenträgers 5,5′ ausgerichtete, seitlich abstehende Führungsrollen (21 in Fig. 2,3 ) vorgesehen, die zwischen einem vorderen Führungsschild 8 und einem hinteren Führungsschild 9 laufen. Durch das Versatzmaß a zwischen den Führungsrollen 21 ergibt sich somit einer starre Führung für die Münzenträger 5,5′.

Fig. 2 zeigt eine Aufsicht auf die Münzstapelvorrichtung 1 gemäß Fig. 1.

Der eine - während der folgenden Stapelphase aktive - Münzenträger 5 ragt mit seinem als Stapeltisch dienenden ersten Schenkel 10 in den Stapelraum 3 bzw. Stapelschacht hinein und bewegt sich senkrecht zur Zeichenebene nach unten. Der Münzenträger 5 nimmt dabei Stück für Stück die über das Förderband 101 zugeführten Münzen 50,50′ auf und bewegt sich synchron dazu Schritt für Schritt in senkrechter Richtung zur Zeichenebene. Der zweite Münzenträger 5′ befindet sich an der Rückseite der Münzenstapelvorrichtung 1 und bewegt sich synchron mit dem Münzenträger 5 in Richtung senkrecht aus der Zeichenebene heraus. Beide Münzenträger 5,5′ sind mittels der endlosen Förderbänder 6,6′ miteinander gekoppelt, die ihrerseits über die Umlenkrollen 60 umlaufen Diese Förderbänder 6,6′ laufen parallel zueinander; bezogen auf die Zeichenebene liegen ihre sichtbaren Führungsbahnbereiche jedoch auf unterschiedlichem Niveau (vgl. die Darstellung in Fig. 1).

Der Antrieb ist nur vereinfacht angedeutet und zwar durch einen Motor 15 , der je eine Umlenkrolle der beiden Förderbänder 6,6′ antreibt und zwar streng synchron. Die Förderbänder 6,6′ sind mit den Münzenträgern 5,5′ über die Gelenkachsen 20 gekoppelt. In der Verlängerung dieser Gelenkachsen 20 sind die Führungsrollen 21 vorgesehen, die an der Frontseite der Münzenstapelvorrichtung 1 zwischen dem vorderen und dem hinteren Führungsschild 8 bzw. 9 zwangsgeführt werden.

Gemäß der Darstellung nach Fig. 2 ist insbesondere die als Andrückelement gegen die jeweils oberste Münze 50 wirkende Feder 110 zu sehen. Diese Feder 110 besteht aus einer geschlitzten Blattfeder, die zu beiden Seiten der Umlenkrolle 100 seitlich auf die Münzen 50 drückt. Grundsätzlich können die beiden Schenkel der geschlitzten Blattfeder jeweils für sich auf die Münzen so drücken; es ist - wie in der Zeichnung dargestellt - jedoch auch möglich, die freien Vorderkanten der geschlitzten Blattfeder miteinander zu verbinden bzw. verbunden zu belassen.

Fig. 3 zeigt einen Münzenträger 5,5′ in Einzeldarstellung. Dieser ist als L-förmiger Finger ausgebildet, dessen erster Schenkel 10 senkrecht aus der Zeichenebene herausragt,und dessen zweiter Schenkel 11 parallel zur Zeichenebene liegt. An diesen zweiten Schenkel 11 ist seitlich je eine Gelenkachse 20 und eine koaxiale Führungsrolle 21 vorgesehen, und zwar relativ zueinander im Abstandsmaß (Versatzmaß) a. Die Gelenkachsen 20 sind mit den schematisch dargestellten Förderbändern 6,6′ verbunden, die schließlich die Münzenträger 5,5′ mit stets horizontal ausgerichtetem Stapelteller auf der rechteckförmigen Bewegungsbahn umlaufen lassen.

Es ist selbstverständlich auch möglich, die mit den Förderbändern 6,6′ verbundenen Gelenkachsen 20 beidseitig mittels Führungsrollen zu führen. Damit ist der Münzenträger 5,5′ an beiden Seiten in je zwei Punkten gelagert und abgestützt.

Um die Münzenstapelvorrichtung 1 sehr kompakt zu bauen, kann vorgesehen sein, die Konturen der Münzenträger 5,5′ in ihrem den zweiten Schenkel 11 betreffenden Bereich so auszubilden, daß der jeweils aufwärts geführte Münzenträger mit seinem ersten Schenkel 10 zumindest teilweise in dem Bereich des zweiten Schenkels 11 des jeweils abwärts geführten Münzenträgers 5 eingreift.

In bevorzugter Weiterbildung der Münzenträger 5,5′ ist darüberhinaus vorgesehen, die ersten Schenkel 10 - wie zeichnerisch in Fig. 2 dargestellt - geschlitzt auszubilden. Damit kann - und dies ist u.U. im Hinblick auf kleine Münzen erforderlich - der Abstand zwischen der Münzen-Vereinzelungs- und - Führungsschiene 102 und der Umlenkrolle 100 mit dem Münzförderband 101 einerseits und der Münzenstapelvorrichtung 1 mit dem Münzenträger 5,5′ andererseits sehr gering, gegebenenfalls überlappend, eingestellt werden.

## Patentansprüche

1. Vorrichtung (1) zum vertikalen Stapeln nacheinander zugeführter Münzen (50) oder dergleichen scheibenförmiger Gegenstände mit einem mit einem endlos umlaufenden Transportmittel (6,6') verbundenen, den Münzstapel aufnehmenden Münzenträger (5), der in einem Stapelraum (3) einer Münzenverpackungsmaschine synchron mit dem Anwachsen des Stapels abwärts bewegbar ist, und
mit einem weiteren Münzenträger (5'), der bezogen auf die Länge des umlaufenden Transportmittels (6,6') im gleichen Abstand zum anderen Münzträger (5) angeordnet ist, so daß mit jedem Umlauf des Transportmittels (6,6') nacheinander zwei Münzenstapel stapelbar sind,
**dadurch gekennzeichnet,**
daß die Münzenträger (5,5') durch einen L-förmigen Finger gebildet sind, dessen erster Schenkel (10) horizontal in den Stapelraum (3) ragt und dessen zweiter Schenkel (11) derart mit einem Paar (6,6') endlos umlaufender Transportmittel verbunden ist, daß diese an zwei, bezogen auf die Längsachse des zweiten Schenkels (11) gegeneinander versetzten seitlichen Gelenkachsen (20) angreifen, daß die endlos umlaufenden Transportmittel (6,6') in entsprechend der Breite des zweiten Schenkels voneinander beabstandeten, zueinander parallelen, im wesentlichen rechteckigen Führungsbahnen umlaufen, die in vertikaler Stapelrichtung dem Abstand (a) der seitlichen Gelenkachsen (20) entsprechend gegeneinander versetzt sind, und daß der zweite Schenkel (11) längs des Stapelraums (3) so geführt ist, daß der erste Schenkel (10) beim Stapeln der Münzen (50) lagestabil im Stapelraum (3) abwärts fährt.

2. Vorrichtung nach Anspruch 1,
**dadurch gekennzeichnet,**
daß die Transportmittel (6,6') Zugmittel , insbesondere Zahnriemen,sind.

3. Vorrichtung nach Anspruch 1
**dadurch gekennzeichnet,**
daß die Transportmittel (6,6') Förderketten sind.

4. Vorrichtung nach Anspruch 2 oder 3,
**dadurch gekennzeichnet,**
daß koaxial zu den Gelenkachsen (20) seitlich abstehende Führungsrollen (21) vorgesehen sind, und
daß längs des Stapelraums (3) ein vorderer Führungsschild (8) und im Abstand des Durchmessers der Führungsrollen (21) ein hinterer Führungsschild (9) zur Aufnahme und Stabilisierung der Führungsrollen (21) vorgesehen ist.

5. Vorrichtung nach einem der Ansprüche 1 bis 4,
**dadurch gekennzeichnet,**
daß zwecks Realisierung einer gedrängten Bauweise die die Münzenträger (5,5') bildenden L-förmigen Finger so ausgebildet sind, daß der erste Schenkel (10) des leer aufwärts transportierten Münzenträgers (5') in die Kontur des abwärts transportierten, stapelnden Münzenträgers (5) eingreift.

6. Vorrichtung nach einem der Ansprüche 1 bis 5,
**dadurch gekennzeichnet,**
daß der erste Schenkel (10) des L-förmigen Fingers konisch ausgebildet ist, und zwar so, daß sich die obere Fläche zur freien Vorderkante hin absenkt.

7. Vorrichtung nach einem der Ansprüche 1 bis 6,
**dadurch gekennzeichnet,**
daß in der der jeweils obersten Münze des Münzstapels entsprechenden Ebene des Stapelraums (3) ein Andrückelement (110) vorgesehen ist, das die jeweils neu zugeführte Münze (50) gegen den Münzstapel drückt.

8. Vorrichtung nach Anspruch 7,
**dadurch gekennzeichnet,**
daß das Ausdrückelement (110) als geschlitzte Blattfeder ausgebildet ist, die punktuell auf die gestapelten bzw zu stapelnden Münzen (50) drückt.

9. Vorrichtung nach Anspruch 8,
**dadurch gekennzeichnet,**
daß die geschlitzte Blattfeder (110) an den freien Vorderkanten geschlossen ist.

10. Vorrichtung nach einem der Ansprüche 1 bis 9,
**dadurch gekennzeichnet,**
daß der erste Schenkel (10) des L-förmigen Fingers geschlitzt ist.

## Claims

1. A device (1) for vertically stacking coins (50) or similar disc-shaped articles supplied one by one, with a coin carrier (5) which is connected to a continuously rotating transport means (6, 6'), receives the coin stack and can be moved downwards in a stacking space (3) of a coin packing machine in synchronisation with the growth of the stack, and with a further coin carrier (5') which is arranged at a fixed distance from the other coin carrier (5) relative to the length of the rotating transport means (6, 6'), so that two coin stacks can be stacked one after the other with each rotation of the transport means (6, 6'),
characterised in that the coin carriers (5, 5') are formed by an L-shaped finger, whose first arm (10) projects horizontally into the stacking space (3) and whose second arm (11) is connected to a pair (6, 6') of continuously rotating transport means, in such a manner that the latter act upon two lateral jointed axles (20), which are offset from one another relative to the longitudinal axis of the second arm (11),
in that the continuously rotating transport means (6, 6') rotate in guideways which are spaced from one another by the width of the second arm, which run parallel to one another, which are substantially rectangular and which are offset from one another in the vertical stacking direction according to the distance (a) between the lateral jointed axles (20), and
in that the second arm (11) is guided alongside the stacking space (3) in such a manner that, during the stacking of the coins (50), the first arm (10) moves downwards in the stacking space (3) in a stable manner with regard to position.

2. A device according to Claim 1,
characterised in that the transport means (6, 6') are traction means, in particular toothed belts.

3. A device according to Claim 1,
characterised in that the transport means (6, 6') are conveying chains.

4. A device according to Claim 2 or 3,
characterised in that laterally projecting guide rollers (21) are provided coaxially with the jointed axles (20), and
in that a front guide plate (8) is provided alongside the stacking space (3) and a rear guide plate (9) is provided at a distance equal to the diameter of the guide rollers (21) for accommodating and stabilising the guide rollers (21).

5. A device according to any one of Claims 1 to 4,
characterised in that, for the purpose of achieving a compact construction, the L-shaped fingers forming the coin carriers (5, 5') are formed in such a manner that the first arm (10) of the empty coin carrier (5') being transported upwards engages with the contour of the stacking coin carrier (5) being transported downwards.

6. A device according to any one of Claims 1 to 5,
characterised in that the first arm (10) of the L-shaped finger is formed tapered in such a manner that the upper surface slopes down towards the free front edge.

7. A device according to any one of Claims 1 to 6,
characterised in that a pressure element (110) is provided in the plane of the stacking space (3) corresponding to the respective uppermost coin in the coin stack, this pressure element (110) pressing the newly supplied coin (50) against the coin stack.

8. A device according to Claim 7,
characterised in that the pressure element (110) is formed as a split leaf spring which presses at points against the coins (50) which have been stacked or are to be stacked.

9. A device according to Claim 8, characterised in that the split leaf spring (110) is closed at the free front edges.

10. A device according to any one of Claims 1 to 9,
characterised in that the first arm (10) of the L-shaped finger is split.

## Revendications

1. Dispositif (1) pour empiler verticalement des pièces de monnaie (50) amenées successivement ou des objets similaires en forme de disque, doté d'un support pour pièces (5) portant la pile de pièces de monnaie et relié à un moyen de transport (6, 6') circulant en continu, qui peut être déplacé vers le bas dans un espace d'empilage (3) d'une machine à faire des rouleaux de pièces de monnaie de manière synchrone avec l'accroissement de la pile, et doté d'un autre support pour pièces de monnaie (5') disposé à égale distance du premier support pour pièces de monnaie (5) par rapport à la longueur du moyen de transport (6, 6'), si bien qu'à chaque rotation complète du moyen de transport (6, 6') deux piles de pièces de monnaie peuvent être empilées successivement, caractérisé en ce que les supports pour pièces de monnaie (5, 5') sont constitués d'un doigt en forme de L dont le premier bras (10) fait saillie de manière horizontale dans l'espace d'empilage (3) et dont le second bras (11) est relié de telle manière à une paire (6, 6') de bandes transporteuses circulant en continu, en ce que ces dernières agissent sur deux axes articulés (20) latéraux opposés par rapport à l'axe longitudinal du second bras (11), en ce que les moyens de transport (6, 6') circulant en continu se déplacent dans des glissières de guidage essentiellement rectangulaires, parallèles, écartées les unes des autres et dont la largeur correspond à la largeur du second bras, qui sont décalées les unes par rapport aux autres dans le sens vertical de l'empilage et dont le décalage correspond à l'écartement (a) des axes articulés (20) latéraux, et en ce que le second bras (11) se déplace le long de l'espace d'empilage (3) de telle manière que le premier bras (10) se déplace vers le bas en position stable dans l'espace d'empilage (3) lors de l'empilage des pièces de monnaie (50).

2. Dispositif selon la revendication 1, caractérisé en ce que les moyens de transport (6, 6') sont des moyens de traction, en particulier des courroies dentées.

3. Dispositif selon la revendication 1, caractérisé en ce que les moyens de transport (6, 6') sont des chaînes de transport.

4. Dispositif selon la revendication 2 ou 3, caractérisé en ce que des rouleaux de guidage (21) écartés latéralement et ayant le même axe que les axes articulés (20) sont prévus, et en ce qu'un plateau de guidage (8) avant est prévu le long de l'espace d'empilage (3) et un plateau de guidage (9) arrière est prévu à une distance correspondant au diamètre des rouleaux de guidage (21) pour porter et stabiliser les rouleaux de guidage (21).

5. Dispositif selon l'une des revendications 1 à 4, caractérisé en ce que, pour réaliser un appareil compact, les doigts en forme de L constituant les supports pour pièces de monnaie (5, 5') sont réalisés de telle manière que le premier bras (10) du support pour pièces monnaie (5') transporté à vide vers le haut mord le contour du support pour pièces de monnaie (5) transporté vers le bas qui empile.

6. Dispositif selon l'une des revendications 1 à 5, caractérisé en ce que le premier bras (10) du doigt en forme de L est réalisé de façon conique, et ce, de telle manière, que la face supérieure s'abaisse vers l'arête frontale libre.

7. Dispositif selon l'une des revendications 1 à 6, caractérisé en ce qu'un élément poussoir (110) est prévu sur le plan de l'espace d'empilage (3) correspondant chaque fois à la pièce de monnaie disposée sur le haut de la pile de pièces, et pousse chaque fois la nouvelle pièce de monnaie (50) amenée vers la pile de pièces.

8. Dispositif selon la revendication 7, caractérisé en ce que l'élément poussoir (110) est réalisé sous forme de ressort à lame fendu appuyant ponctuellement sur les pièces de monnaie (50) empilées ou à empiler.

9. Dispositif selon la revendication 8, caractérisé en ce que le ressort à lame (110) fendu est fermé au niveau des arêtes frontales libres.

10. Dispositif selon l'une des revendications 1 à 9, caractérisé en ce que le premier bras (10) du doigt en forme de L est fendu.
